Europäisches Patentamt

European Patent Office

Office européen des brevets

(11) Numéro de publication: **0 274 944 B1**

# (12) FASCICULE DE BREVET EUROPEEN

(45) Date de publication de fascicule du brevet: **01.04.92** (51) Int. Cl.⁵: **G06K 9/46**

(21) Numéro de dépôt: **87402832.7**

(22) Date de dépôt: **11.12.87**

(54) **Procédé et dispositif de reconnaissance de caractères.**

(30) Priorité: **12.12.86 FR 8617436**

(43) Date de publication de la demande:
**20.07.88 Bulletin 88/29**

(45) Mention de la délivrance du brevet:
**01.04.92 Bulletin 92/14**

(84) Etats contractants désignés:
**DE GB NL**

(56) Documents cités:
**FR-A- 2 121 272**

**AUTOMATIC INTERPRETATION AND CLASSIFICATION OF IMAGES, A NATO Advanced Study Institute, 1969, pages 295-322, Academic Press, New York, US; J.R. PARKS: "A multi-level system of analysis for mixedfont and hand-blocked printed characters recognition"**

**PATTERN RECOGNITION, vol. 3, 1971, pages 345-361, Pergamon Press, GB; R. NARASIMHAN et al.: "A syntax-aided recognition scheme for handprinted English letters"**

**PATENT ABSTRACTS OF JAPAN, vol. 8, no. 6 (P-247)[1443], 12 janvier 1984; & JP-A-58 169**

**295 (RICOH K.K.) 05-10-1983**

**THE MARCONI REVIEW, vol. 32, nos. 172-175, janvier-décembre 1969, page 82-104, Chelmsford, Essex, GB; J. THOMPSON et al.: "Experimental multifont page reader"**

(73) Titulaire: **ETAT FRANCAIS représenté par le Ministre des PTT (Centre National d'Etudes des Télécommunications) 38-40 rue du Général Leclerc F-92131 Issy-les-Moulineaux(FR)**

(72) Inventeur: **Simon, Jean-Claude 10, rue de l'Université F-75007 Paris(FR)**

(74) Mandataire: **Plaçais, Jean-Yves et al Cabinet Netter, 40, rue Vignon F-75009 Paris(FR)**

## Description

L'invention concerne la reconnaissance des caractères.

Dans ce sujet d'actualité, on connaît aujourd'hui :

- des lecteurs optiques dits "dédiés", qui ont été développés en vue d'une application bien déterminée, et sont utilisés dans un contexte très limité. Appartiennent à cette catégorie, notamment, les dispositifs de lecture automatique d'adresses postales en vue d'un tri automatisé, les dispositifs d'aide aux aveugles, le dispositif de saisie numérique pour les banques.
- les lecteurs optiques limités à quelques polices de caractéres, dont l'application est plus large, car ce sont des machines capables de lire un nombre limité de polices de caractères, que l'on peut utiliser dans le domaine de la bureautique ou du courrier électronique. La qualité des documents que peut lire ce type de machine doit, en règle générale, satisfaire des critères assez contraignants quant à l'encrage et aux contrastes, par exemple.
- les lecteurs optiques pouvant lire un grand nombre de polices. Il s'agit là de machines plus évoluées que les précédentes, dans la mesure où elles sont capables d'apprendre à lire une nouvelle police de caractères. Ce gain en performance de lecture trouve sa contrepartie dans l'existence d,un temps d'apprentissage non négligeable. Par ailleurs, la qualité requise pour les documents à analyser est analogue à celle du cas précédent.

Dans ces conditions, il est clair qu'on ne dispose pas actuellement de moyens de reconnaissance de caractères véritablement satisfaisants.

En effet, les machines dédiées souffrent d'un champ d'application très limité, et doivent de plus recevoir le document à lire en contact direct, ce qui constitue une limitation supplémentaire.

Pour les deux autres types de machines, c'est la qualité d'impression requise qui est la contrainte la plus importante : il est par exemple difficile de traiter des photocopies, ce qui est considérablement gênant pour les applications de type bureautique, courrier électronique ou communication d'entreprise.

Dans le second type de machines, le fait que le nombre de polices reconnaissables soit limité est un handicap certain, car il est très difficile d'établir, en dehors de situations particulières, une police standard qui soit d'application générale.

Quant au dernier type de machines, c'est l'apprentissage qui est leur inconvénient majeur, car il est coûteux en temps, remarque étant faite que la vérification des bons résultats, après apprentissage, n'est pas non plus une chose simple. Tout cela nuit à la souplesse d'utilisation du système.

La présente invention a pour but d'apporter un remède aux inconvénients des matériels existants.

L'un des buts de l'invention est de proposer des moyens de reconnaissance de caractères qui soient "multi-polices", s'appliquant même à du manuscrit, pourvu que les caractères écrits à la main soient isolés (caractères bâtons) ou au moins séparables.

Corrélativement, un autre but de l'invention est de permettre d'établir des représentations invariantes des caractères, c'est-à-dire indépendantes de la police des caractères utilisés.

L'invention a aussi pour but de procurer des moyens de reconnaissance de caractères qui soient invariants à l'épaisseur des traits des caractères, à leur taille, à leur empâtement, et même dans une certaine mesure à leur orientation, pour reconnaître aussi des caractères italiques.

En d'autres termes l'invention vise à fournir des moyens de reconnaissance de caractères qui puissent s'intégrer aisément dans tout système ayant besoin d'une telle reconnaissance de caractères.

Par ailleurs, l'invention a encore pour but de fournir des moyens qui puissent s'appliquer aussi bien à des images de caractères "noir et blanc", c'est-à-dire où l'intensité optique est exprimée en tout ou rien, qu'à des images possédant des niveaux de gris. Ceci permet de s'affranchir de la contrainte de grande qualité du document original traité.

Pour cela, l'invention propose tout d'abord un procédé de traitement de signaux numériques d'images de lignes, en particulier des caractères, du type dans lequel :

a) on isole chaque forme élémentaire ou caractère, en l'encadrant dans une matrice de configuration prédéterminée, en particulier rectangulaire, et

b) on recherche à l'intérieur de la matrice des formes primitives de type prédéterminé, tels que les extrémités de traits ou les croisements ou branchements à au moins trois branches.

Selon l'invention, l'opération b) comprend :

Selon un autre aspect de l'invention, l'opération b1) comprend :

b11) la recherche de quanta, définis chacun comme un pavé homogène d'un nombre minimum de pixels dont l'intensité (c'est-à-dire le signal numérique représentant une densité optique) est supérieure à un seuil local, et

b12) la détection d'une suite de quanta qui se recouvrent, comme représentant un trait, et

EP 0 274 944 B1

b2) la soustraction des traits ainsi reconnus de la matrice, pour isoler et identifier des zones caractéristiques contenant lesdites formes primitives.

De préférence, l'étape b11) comprend :

- au moins un balayage de la matrice par une ligne prédéterminée, déplacée parallèlement à elle-même en translation, une plage courante étant définie par la pile de pixels rencontrés par la ligne de balayage et présentant une intensité supérieure à celle du fond, cette plage courante étant considérée comme une première plage au début du balayage;
- la recherche de contacts entre la plage courante, une ou des plages amont, ainsi qu'une ou des plages aval, vis-à-vis du balayage; et
- la reconnaissance d'un quantum en présence d'une condition prédéterminée de contacts entre plages adjacentes.

Selon une caractéristique préférée de l'invention, les dites formes primitives comprennent :

- les extrémités de traits;
- les changements de directions;
- les points de rebroussement;
- les croisements ou branchements à au moins trois branches; et
- les boucles fermées.

En principe, les boucles fermées peuvent être détectées par des moyens classiques. Par contre, les quatre autres types de formes primitives sont détectés par les moyens de soustraction de traits selon l'invention.

Par ailleurs, les formes primitives ainsi localisées dans les zones caractéristiques sont codées non seulement quant à leur nature, mais aussi suivant la direction du ou des traits qui y aboutissent.

Selon une autre caractéristique préférée de l'invention, le procédé comporte en outre :

c) le balayage des zones caractéristiques, par au moins une ligne, selon un mouvement prédéterminé, afin d'établir un ordre des zones caractéristiques, identifiées chacune en l'une des formes primitives; et

d) la comparaison de la liste de formes primitives ainsi obtenue à un jeu de descriptions de caractères contenues en mémoire, et exprimées elles aussi compte tenu du mouvement prédéterminé de la ou des lignes de balayage.

Le balayage peut être opéré par une ligne droite ou courbe passant par un point fixe (exemple centre de gravité) ou situé à l'infini (translation).

Une autre caractéristique préférée de l'invention consiste à prévoir que les listes de formes primitives ainsi traitées sont partiellement ordonnées, c'est-à-dire qu'elles réunissent dans un ordre indifférent, par exemple à l'aide de parenthèses, des formes primitives rencontrées simultanément lors du balayage.

Très avantageusement, on fait subir à chaque matrice au moins deux balayages prédéterminés, auxquels sont associées respectivement deux listes partiellement ordonnées, que l'on compare donc à des listes partiellement ordonnées contenues en mémoire, à raison d'une au moins pour chaque caractère ou forme à reconnaître.

Il est avantageux que les listes formant les descriptions contenues en mémoire soient rangées par classes Ai non disjointes.

La détermination de la classe Ai, ou des classes Ai, d'identification se fait par interrogation de la ou des listes du caractère inconnu. Exemple : présence ou absence de caractéristiques telles que boucles, croisements, etc.

La comparaison peut être accélérée par le fait que la recherche en mémoire se fasse avec pour critères de base la présence de croisements ou branchements dans la liste, ainsi que la longueur de celle-ci.

Selon un mode de réalisation préféré de l'invention la comparaison entre les listes obtenues et les listes en mémoire fait intervenir un calcul de distance entre chaînes de caractères à comparer, à l'intérieur d'une classe Ai.

De préférence, il est prévu selon l'invention que, lorsque ladite distance dépasse un seuil, on procède en outre aux étapes suivantes :

e) érosion du caractère à identifier, pour en diminuer l'épaisseur (le mot "caractère" est utilisé ici comme une désignation simple de l'ensemble de traits dépassant le fond que contient la matrice, mais il est clair que le caractère n'est pas encore identifié), et

f) nouvelle exécution des étapes b) à d).

L'invention offre aussi un dispositif permettant la mise en oeuvre du procédé ci-dessus, et ce dispositif comporte, en combinaison :

- des moyens de segmentation et de cadrage des caractères, susceptibles de recevoir des informations d'images en provenance d'un système de prise d'images,
- des moyens de reconnaissance des formes primitives, par soustraction des traits, telle que spécifiée ci-dessus,

- des moyens de description des formes primitives selon au moins une liste, au moins partiellement ordonnée,
- des moyens de stockage de descriptions invariantes de caractères sous forme de listes prédéterminées de référence,
- des moyens de comparaison des listes obtenues aux listes de référence, et
- des moyens pour identifier le caractère comme étant celui donnant l'écart minimum entre les listes obtenues et les listes de référence.

Ce dispositif est susceptible de se voir incorporer toutes les caractéristiques décrites plus haut sous forme de procédé.

En particulier, ce dispositif pourra comporter en outre des moyens d'affinage, propres à diminuer l'épaisseur du caractère (sous la même réserve que ci-dessus) avant de l'appliquer à nouveau aux moyens de reconnaissance de formes primitives.

D'autres caractéristiques et avantages de l'invention apparaîtront à l'examen de la description détaillée ci-après, avec ses annexes, et des dessins annexés sur lesquels :

- la figure 1 est un schéma synoptique d'un dispositif de reconnaissance de caractères selon l'invention;
- la figure 2 est un diagramme montrant l'identification de pixels par rapport au fond;
- les figures 3A et 3B sont deux dessins montrant l'usage d'un balayage horizontal et d'un balayage vertical, respectivement, pour la reconnaissance du caractère B;
- la figure 4 est un schéma explicatif montrant la structure invariante du caractère B;
- la figure 5 est un schéma symbolique illustrant les relations entre différents moyens de traitement selon l'invention; et
- les figures 6A, 6B, 7A, 7B, 8A, 8B illustrent différentes situations relatives de plages entre la ligne précédente et la ligne en cours (ou ligne courante) de balayage.

Les dessins annexés comportent à de nombreux titres des éléments de caractère certain, en particulier géométriques. En conséquence, ils pourront non seulement servir à mieux faire comprendre la description détaillée, mais aussi contribuer à la définition de l'invention, autant que nécessaire.

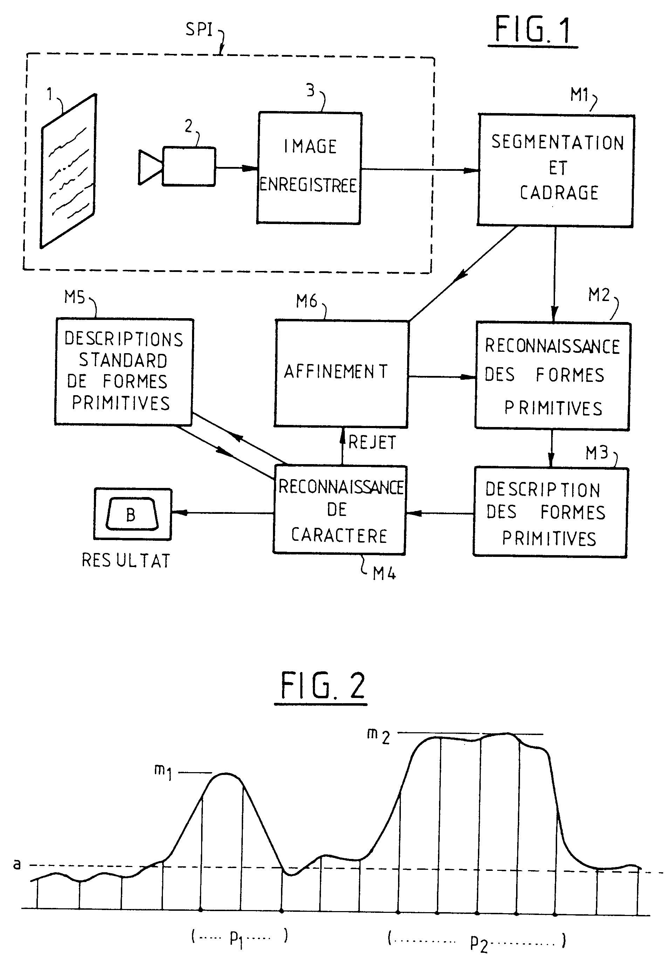

Sur la figure 1, la référence 2 désigne une caméra reliée à une mémoire 3 propre à contenir l'image enregistrée d'un document 1 sur lequel figurent des caractères inscrits, soit de type imprimerie, soit à la main.

La mémoire d'images est reliée à des moyens de segmentation et de cadrage M1. (On utilisera ci-après le mot "module" pour désigner les moyens utilisés selon l'invention.) Ce module M1 est relié à un module M2 pour la reconnaissance des formes primitives, qui transmet à son tour les informations à un module M3 de description des formes primitives.

Intervient alors un module M4 de reconnaissance des caractéres, qui compare la description des formes primitives obtenue par le module M3 à des descriptions standards ou de référence contenues dans un module M5. Si la comparaison réussit, c'est-à-dire qu'elle satisfait à certains critères de proximité, on obtient un résultat, par exemple le caractère imprimé B.

Si, au contraire, elle échoue, il est possible à l'aide d'un module d'affinement M6 de procéder à une érosion du caractère tel que segmenté et cadré par le module M1, pour, après ce traitement, appliquer à nouveau le caractère au module M2.

On peut d'ores et déjà indiquer que ce procédé d'affinement a permis d'augmenter considérablement l'efficacité du dispositif de reconnaissance des caractères selon l'invention.

Un système de prise d'images tel que celui de la figure 1 a pour résultat une représentation numérique d'une image par des échantillons numériques que l'on appelle maintenant pixels.

Ces échantillons peuvent être de type tout ou rien, c'est-à-dire que chaque pixel ne comprend qu'un bit. Ils peuvent aussi tenir compte de plusieurs degrés d'intensité optique du document, c'est-à-dire de plusieurs niveaux de gris, auquel cas à chaque pixel on associe plusieurs bits.

L'homme de l'art sait disposer les pixels suivant les sommets d'une matrice, qui peut être par exemple carrée ou triangulaire. Cette opération consistant à placer tous les pixels de l'image suivant les sommets d'une matrice est souvent dénommée "tessellation".

Mise à part cette tessellation, le module M1 a aussi pour fonction de segmenter les caractères, c'est-à-dire de les isoler un par un dans une matrice rectangulaire. On sait par exemple qu'un caractère imprimé peut être correctement représenté par une matrice rectangulaire de 20 pixels par 30 pixels, ce qui correspond à une définition totale de 300 à 600 pixels par caractère. Il est à noter que le caractère ne doit pas toucher les bords de la matrice en question, qui sont alors considérés comme possédant le niveau de fond de l'image recueillie par le système de prise d'images SPI.

Le module M1 peut être réalisé de manière connue de l'homme de l'art.

On dira simplement ici que le niveau du fond peut être défini par exemple en faisant la valeur moyenne de l'ensemble des pixels de la matrice de cadrage du caractère, car on peut remarquer qu'un caractère ne remplira qu'une faible partie de la surface de la matrice qui le contient.

Le fond étant ainsi défini, un objet, qui peut devenir un caractère, sera représenté par des pixels présentant une valeur différente de celle du fond. On peut prendre par exemple comme règle qu'aucune droite, verticale ou horizontale dans le cas d'une matrice carrée, ne doit avoir moins de trois (exceptionnellement deux) pixels possédant une valeur différente du niveau de fond, à son intersection avec l'objet. Elle pourra bien entendu en avoir plus.

La figure 2 montre par exemple qu'un balayage par une droite horizontale permet d'obtenir deux pixels adjacents possédant un niveau maximal ml dépassant le niveau a du fond, comme illustré en $p_1$, puis cinq pixels adjacents allant jusqu'à un niveau maximal $m_2$, dépassant le niveau du fond, ce qui forme un ensemble de pixels $p_2$. Les ensembles de pixels ou plages $p_1$ et $p_2$ que l'on obtient lors du balayage de la matrice par une ligne sont des éléments de l'objet utile pour la reconnaissance du caractère.

On s'intéressera maintenant au module M2 qui va réaliser une reconnaissance des formes primitives.

L'usage de formes primitives dans le domaine de la reconnaissance des caractères a déjà été proposé. Il s'agit là en fait de déterminer une reconnaissance de caractères qui soit indépendante des variations que l'on peut rencontrer quant à la représentation des caractères, variations qui concernent notamment la police, l'encrage, les transformations géométriques et les déformations.

Un procédé de reconnaissance des caractères utilisant des formes primitives au sens de la présente demande est connu d'un article écrit par J.R. Parks dans le document "Automatic interpretation and classification of images", pages 295-332, publié 1969. Selon l'enseignement de Parks on recherche d'abord des traits de lignes mais ces traits ne sont pas éliminés, ils sont plutôt analysés à fin de déterminer les formes primitives.

L'invention fait usage de formes primitives choisies en fonction de leur invariance à ces transformations. Ces formes primitives sont :

a) les extrémités de traits,

b) les changements de directions,

c) les points de rebroussement,

d) les croisements ou branchements à trois branches ou plus, et

e) les boucles fermées.

Jusqu'à présent, les hommes de l'art n'ont pas pu déterminer un procédé faisant usage de telles formes primitives, et qui ne donne pas des erreurs graves.

Selon la présente invention, la détection des boucles (forme primitive e) peut se faire par les moyens habituels. Par contre, la détection des formes primitives a) à d) se fait d'une manière nouvelle.

Au lieu de rechercher directement les primitives en question, elles sont obtenues par un procédé complémentaire :

- recherche de traits à l'intérieur de la matrice de l'objet, et

- soustraction des traits ainsi reconnus de la matrice de l'objet, après quoi restent les zones caractéristiques contenant lesdites formes primitives.

Dans chaque zone caractéristique, on identifie la forme primitive qu'elle contient, et on détermine la manière dont elle se raccorde au(x) trait(s) qui y aboutissent.

Ceci est rendu possible par l'utilisation d'un détecteur de lignes ou traits extrêmement efficace, que l'on décrira plus loin.

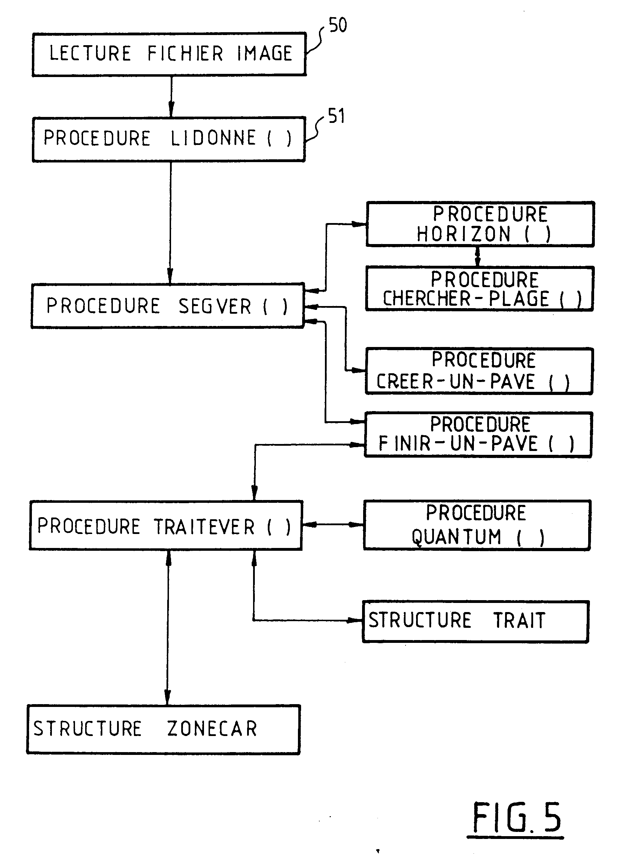

La première étape du procédé selon l'invention consiste en la lecture du fichier images enregistré dans la mémoire 3, cette opération de lecture étant notée 50 sur la figure 5.

Cette opération est suivie d'une procédure nommée **"lidonne()"**, qui constitue l'étape 51 de la figure 5.

Cette procédure **lidonne()** a pour fonction d'initialiser les paramètres globaux à partir des données lues dans le fichier images. Elle assure aussi l'interface entre le système d'acquisition des données d'images et le système de reconnaissance de caractères selon l'invention.

Le fichier source peut contenir un nombre quelconque d'images échantillonnées de tailles variables. Le format d'une image échantillonnée est le suivant :

- un entier sur quatre octets définissant le nombre de lignes de l'image, noté **nl__image,**

- un entier sur quatre octets définissant le nombre de colonnes de l'image notée **nc__image,**

- un caractère non signé sur un octet définissant le niveau de gris du fond de l'image.

Le nombre total de pixels de l'image est donné par le produit **nl__image*nc__image.** Ces pixels sont rangés ligne par ligne.

La procédure **lidonne()** utilise comme variables globales des pointeurs **image, trace.** Le premier, **image,** pointe vers les structures **MATOCTET** de mémorisation de l'image à traiter; le second, **trace,** pointe vers la trace du travail effectué par suite de l'exécution du procédé selon l'invention.

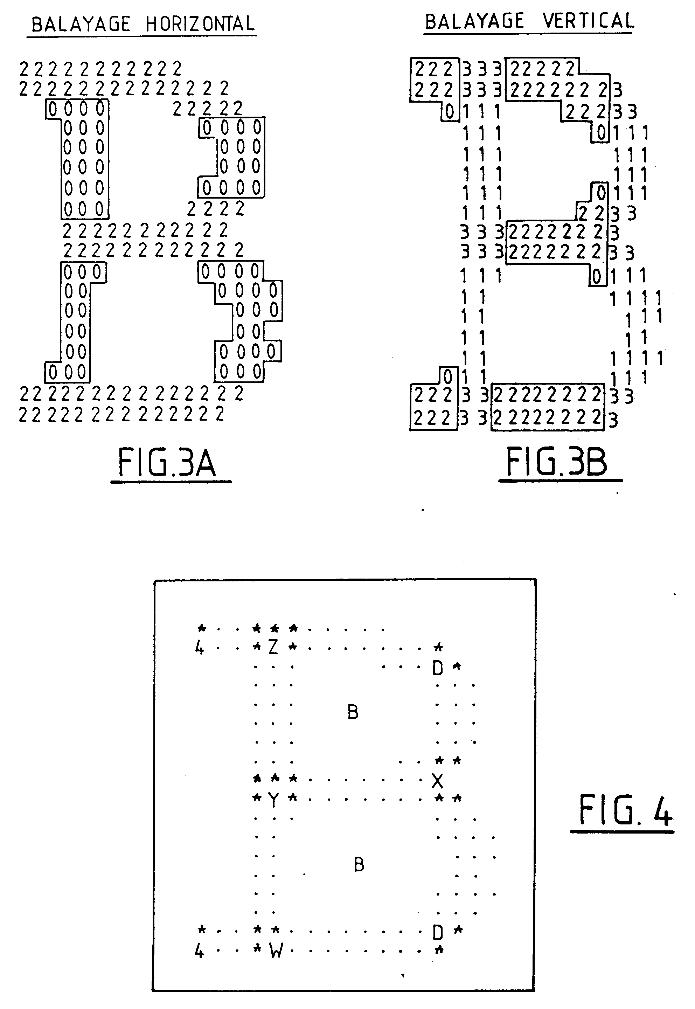

Il en résulte une matrice **TRACE** pointée par le pointeur trace, et qui contient le code d'interprétation des pixels, sur lequel on reviendra plus loin, et dont un exemple est donné sur les figures 3A et 3B.

Comme autres variables globales sont prévues **nl_image** et **nc_image,** déjà définies, ainsi que **contraste,** qui indique l'écart maximum entre la valeur des pixels (au sens de l'intensité optique) et la valeur du fond.

La procédure **lidonne()** utilise encore comme variables locales :
- **fond,** qui désigne le niveau de gris du fond de l'image, cette valeur étant par exemple estimée égale à la moyenne des niveaux de gris de la bordure de l'image;
- **i** et **j** qui sont des variables de boucle.

Le formalisme de la procédure **lidonne()** est donné sous l'intertitre AA dans l'annexe. L'homme de l'art aura reconnu ici, dans la procédure **lidonne(),** tout comme dans les autres descriptions formelles données en annexe, qu'il s'agit d'une écriture formelle en langage C.

Les quatre premières lignes de cette procédure (AA1 à AA4) se comprennent d'elles-mêmes.

A la ligne AA10, on initialise la matrice image pour les valeurs présentes des variables de boucle **i** et **j**.

Les deux lignes suivantes comparent chaque pixel de la matrice image au fond, pour permettre ensuite le calcul du contraste à la ligne AA13.

Ceci est répété jusqu'à ce qu'il n'y ait plus de données à traiter, test réalisé par les quatre premières lignes de la procédure **lidonne().**

Le résultat de la procédure **lidonne()** est de détecter les éléments significatifs de l'image enregistrée, par rapport au fond de celle-ci, exprimé d'une manière locale.

La suite du procédé selon l'invention comporte la mise en oeuvre de deux procédures de balayage, qui, dans le cas d'une matrice de forme rectangulaire, peuvent être des balayages effectués l'un verticalement, l'autre horizontalement.

Le balayage vertical va explorer l'image ligne par ligne, par une procédure dite **segver().** De son côté, le balayage horizontal va explorer l'image colonne par colonne, à l'aide d'une procédure **seghor(),** qui ne sera pas décrite en détail, du fait qu'elle est le symétrique de la procédure **segver(),** en intervertissant le rôle des lignes et des colonnes.

Pour chaque ligne, la procédure **segver()** appelle une sous-procédure **horizon()** qui cherche des plages sur la ligne courante. Une plage est constituée d'un ensemble de pixels adjacents estimés comme significatifs, c'est-à-dire se distinguant de la valeur locale du fond de l'image.

Les plages trouvées contribuent à la formation de sous-objets que l'on appelle "pavés" et qui sont une suite de plages connexes sans embranchement. On verra plus loin que lorsqu'un tel sous-objet ou pavé est formé, la procédure **segver()** appelle une procédure **traitever(),** qui va avoir pour fonction de détecter la présence de traits à l'intérieur du pavé ou sous-objet préalablement identifié.

Par ailleurs, les connexions entre les pavés permettent de détecter des boucles éventuelles.

On considère tout d'abord la procédure **segver(),** dont le formalisme est donné, toujours en langage C, sous l'intertitre BB dans l'annexe 2.

La variable globale de cette procédure est le nombre de lignes de l'image, **nl_image.**

Ses variables locales sont :
- **firstpave,** qui est un pointeur vers la tête de la liste des sous-objets que contient l'image;
- **runpave,** qui indique l'élément courant considéré dans cette liste de sous-objets,
- **newpave,** qui désigne un nouveau sous-objet à insérer dans la liste des pavés,
- **bouhau, boubas** qui sont deux pointeurs servant dans la recherche de boucles, et
- **buff| |,** qui est un vecteur contenant les débuts et les fins de plage rencontrés sur la ligne courante.

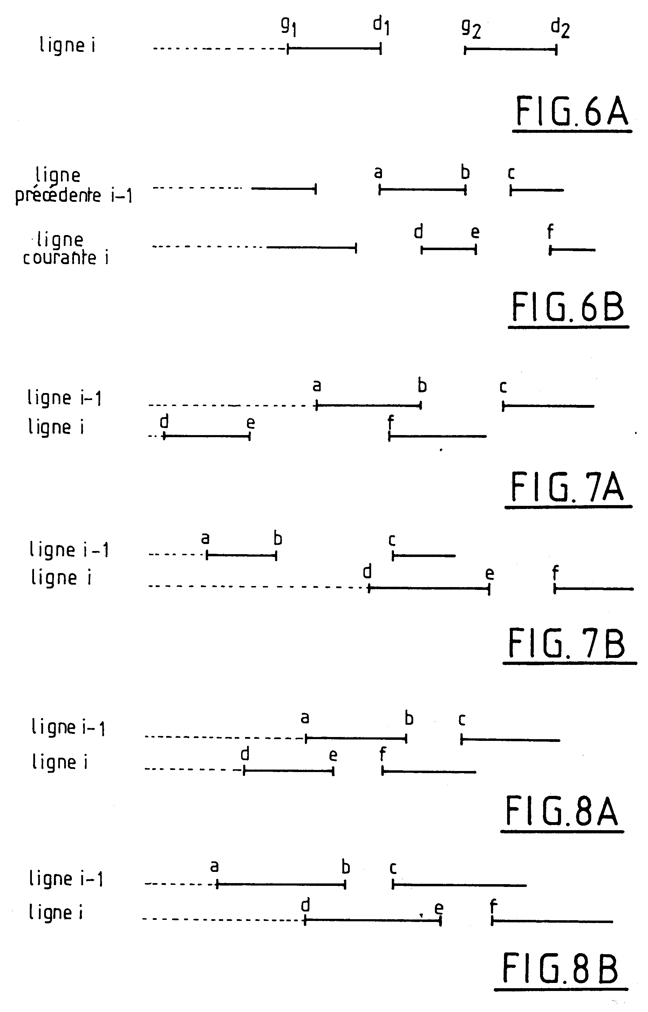

Si l'on prend par exemple une ligne courante qui possède les plages illustrées sur la figure 6A, l'état du vecteur **buff** est

**buff|0|** = g1
**buff|1|** = d1
**buff|2|** = g2
**buff|3|** = d2
**buff|4|** = COLMAX

où g1, d1, g2, d2 sont les numéros de colonnes des débuts et des fins de plages successivement rencontrés tandis que COLMAX désigne le numéro de colonne maximal.

Les variables locales comprennent encore des valeurs **a, b, c, d, e, f,** qui sont les indices de colonnes des plages courantes, les trois premiers étant valables pour la ligne précédente d'indice i-1, les trois autres pour la ligne courante d'indice i, comme illustré sur la figure 6B.

Dans la section BB de l'annexe, il apparaît que la procédure **segver()** comprend une première étape consistant à initialiser les variables (ligne BB1).

La seconde étape consiste à explorer la matrice d'image, de façon à marquer les débuts et fins de plages (plages "en cours") de la ligne précédente, puis à détecter les plages sur la nouvelle ligne appelée ligne courante (voir BB5), ce qui fait appel à une autre procédure **horizon(i,buff).**

Après réalisation de cette procédure **horizon(),** on peut alors mettre **d, e, f** au début des plages ("en cours") de la ligne courante, en fait aux débuts et fins de plages puisqu'on considère aussi bien ici les plages d'informations que les plages de fond.

La boucle TANT QUE démarrant en BB7 assure qu'on aura exploré toutes les plages de la ligne précédente ou de la ligne en cours.

La plage en cours est celle qui commence à l'indice d et finit à l'indice e. Si e est inférieur au début de plage a situé à la ligne précédente (figure 7A), le pavé courant qui contient la plage (a,b) de la ligne précédente est mis à part et l'on instaure un nouveau pavé créé à partir de la plage (d,e) de la ligne en cours.

La procédure de création d'un pavé courant (**créer__un__pavé()**) sera décrite plus loin.

Si, au contraire (figure 7B), le début de la plage noire rencontrée dans la ligne en cours, indice d, se situe entre deux limites de plages disjointes de la ligne précédente, à savoir b et c, alors le pavé courant se termine en (a, b), et l'on exécute une procédure **finir__un__pavé().**

Dans les autres cas (le SINON, en BB16), la situation sera telle que les plages (a,b) d'une part pour la ligne précédente, (d,e) d'autre part pour la ligne en cours se coupent, et peuvent ensemble constituer un pavé, sous certaines conditions.

C'est ce que va déterminer la seconde fonction TANT QUE de la ligne BB17. Si le début de plage f est en regard d'une plage de la ligne précédente (figure 8A), il y a lieu à nouveau de faire appel à la procédure **créer__un__pavé().**

Sinon (figure 8B), on est dans le cas où la fin e d'une plage antérieure de la ligne en cours est en regard d'une plage de la ligne précédente, débutant en c. Le pavé courant se termine alors en (a,b) et on réalise la procédure **finir__un__pavé().**

On empile alors la plage (d,e) par rapport aux plages déjà trouvées du pavé courant, on avance sur la plage suivante de la ligne précédente, et on avance sur la plage suivante de la ligne courante.

L'homme de l'art comprendra que ceci réalise une exploration pas à pas des différentes plages rencontrées sur la ligne en cours, avec chaque fois prise en considération des plages en regard de la ligne précédente, aux fins d'établir les ensembles de pavés qui vont permettre de poursuivre les opérations de reconnaissance de caractères.

La procédure **horizon()** déjà évoquée a pour fonction de permettre la détection des plages situées sur une même ligne.

Ses paramètres sont :

**i**, qui est l'indice de la ligne de balayage donné par le programme qui appelle cette procédure;

**Buffer** qui est un vecteur résultat que l'on va retourner au programme appelant. Ce vecteur contient des débuts et des fins de plages détectées sur la ligne i, et possède une structure semblable à celle de la variable locale **buff| |** de la procédure **segver()** que l'on a déjà décrite.

Les variables globales de la procédure **horizon()** sont :

**image,** qui est un pointeur vers la matrice image, contenant l'image à traiter,

**nl__image** et **nc__image** déjà définis

**contraste** également défini.

Ses variables locales sont

l'indice courant sur les colonnes **j,**

**plage** qui est l'indice courant sur le vecteur buffer| |

**ouv** qui est une variable de début de plage,

**fer** qui est une variable de fin de plage,

**seuilmaxloc** qui définit un seuil d'acceptation d'un maximum local comme le centre d'une plage.

En effet, la définition d'une plage tient compte, s'il s'agit d'une image à niveaux de gris, de la valeur des différents pixels qui vont être rencontrés.

La procédure horizon() est écrite formellement sous l'intertitre CC, en annexe.

Par convention, le symbole &x désigne l'adresse de la variable x, tandis que *x désigne le contenu de la variable pointée par x.

La première étape de cette procédure **horizon()** consiste naturellement à partir de l'indice colonne j = 1, de la valeur 0 pour l'indice plage, et du seul état **buffer|0| = COLMAX** pour le **buffer**, puisqu'aucune plage n'a été rencontrée jusqu'au nombre maximal de colonnes.

EP 0 274 944 B1

En CC4, une boucle TANT QUE pourra faire croître l'indice j jusqu'à la fin de la ligne, avec à chaque fois détermination du fait que image|i| |j| est un maximum local.

Si cette condition est vérifiée, on cherche une plage à partir de la ligne i et de la colonne j, et on donne une nouvelle composante au vecteur **buffer** pour l'ouverture de la plage et une nouvelle composante au vecteur buffer pour la fermeture de la plage. On incrémente de 2 l'indice courant plage sur le vecteur **buffer,** et l'on prend pour nouvelle valeur de j la fin de la plage venant d'être identifiée, soit j = fer + 1.

Dans le cas contraire (en CC12), on incrémente simplement l'indice j d'une unité.

La procédure **chercher__plage()** est donnée en annexe sous la rubrique DD.

En DD1, on prend un seuil égal à la moitié du maximum local image|i| |j|.

Aux lignes DD2 à DD4, tant que la valeur de j pour l'ouverture de plage reste supérieure au début de ligne et que la valeur correspondante de l'intensité IMAGE reste supérieure au seuil, on décrémente l'indice d'ouverture de la plage. Le résultat est naturellement la valeur jouv correspondant effectivement au début de plage.

De même les étapes DD5 à DD7 vont effectuer la même opération dans l'autre sens, à partir du milieu de plage, jusqu'à obtenir une fin de ligne ou une valeur de l'intensité image au niveau de l'indice j pour la fermeture de plage, qui est inférieure au seuil.

Sous la rubrique EE apparaît en annexe la procédure **créer__un__pavé().**

Sa première étape consiste à allouer dynamiquement une structure pavé. Compte tenu de sa simplicité, il n'est pas nécessaire de définir ici cette structure en détail. On initialise la première plage de la structure allouée à |d,e|, on initialise ensuite les autres paramètres de la structure pavé.

A partir de EE4, une deuxième étape consiste à insérer le pavé maintenant créé à gauche du pavé pointé par le pointeur ppave, dans la liste doublement liée des pavés déjà trouvés. Les pavés sont ainsi rangés dans l'ordre de leur apparition sur la ligne précédente, ce qui permet de leur associer les différentes plages rencontrées sur la ligne courante.

Et la troisième étape, en EE6, consiste à avancer à la plage suivante de la ligne courante.

Sous la rubrique FF apparaît en annexe, la procédure **finir__un__pavé().**

Sa première étape consiste à chercher un ou plusieurs traits dans le sous-objet ppave trouvé, en détectant une ou plusieurs suites de quanta. Cette étape s'effectue en FF1 par la procédure traitever() sur laquelle on reviendra plus loin.

Sa deuxième étape consiste tout d'abord à affecter au pavé courant le pavé qui suit le pavé ppave dans la liste des pavés, à détruire le pavé ppave de la liste des pavés, et à libérer la structure détruite.

On effectue ainsi un nettoyage au fur et à mesure des informations contenues dans la liste des pavés, après un traitement au fur et à mesure en vue de la détermination de traits.

Au prix d'une consommation de mémoire plus grande, il serait naturellement concevable d'établir d'abord tous les pavés, pour effectuer ensuite la détermination des traits.

En FF5, une troisième étape consiste à avancer à la plage suivante de la ligne précédente.

Avant de décrire la procédure **traitever()**, qui apparaît sous la rubrique GG en annexe, il convient d'abord de donner une définition du quantum.

Un quantum est une succession d'au moins trois plages connexes vérifiant les conditions suivantes :

1° - | **a-d** | ≤ 1 et | **b-e** | ≤ 1, où a,b et d,e désignent respectivement le début et la fin des plages successives.

2° - |n*n| ≧ **S - contact*S/4 - n + 2**, où **n** est le nombre de plages du quantum, **S** le nombre total des pixels du quantum, et **contact** prend les valeurs 0, 1 ou 2 suivant le nombre de liaisons entre le quantum et son environnement.

Les paramètres utilisés sont :

**flag** qui est un drapeau valant 1 pour le premier quantum d'un trait à détecter, ou 0 dans le cas contraire.

**ppave** est le pointeur vers le pavé dans lequel on cherche des traits éventuels

**pp** est la première plage du quantum

**dp** est la dernière plage du quantum

Les variables locales sont :

**contact1** qui indique l'existence de contacts 0 ou 1 au fond du quantum (c'est-à-dire du côté amont de celui-ci).

**contact** est le nombre de contacts (0,1 ou 2) intéressant le fond et le sommet du quantum, le sommet étant considéré du côté aval de celui-ci,

**np** est le nombre de plages formant le quantum et

**somp,** qui correspond à S ci-dessus, exprime le nombre total des pixels que va contenir le quantum.

La première étape de la procédure **traitever()** consiste, de GG1 à GG3, à initialiser à 0 les valeurs **ppdq** et **dpdq** représentant respectivement la première et la dernière plage du quantum, tandis que la variable binaire **traitencours** est mise à faux, indiquant qu'on n'a pas encore trouvé de traits.

Une deuxième étape commence alors, avec en GG4 un opérateur TANT QUE dont la condition d'exécution est que l'on n'a pas encore atteint la fin du pavé pointé par **ppavé.**

Si un trait est en cours (GG5), deux cas peuvent se présenter:

- un quantum a été trouvé à partir de la **ppdq**-ième plage du pavé (ligne GG7). On affecte alors la fin du trait à la valeur dpdq, et on recherche le quantum suivant à partir du milieu du quantum précédent, comme exprimé par les lignes GG9 à GG11.
- dans le cas contraire (GG12), c'est alors qu'un trait commençant en **debtrait** et se terminant en **fintrait** est trouvé. On mémorise ce trait, et on cherche le trait suivant à partir de l'indice **fintrait + 1.** Cela est effectué par les lignes GG13 à GG15.

Vient alors en GG16 l'autre terme de l'alternative initiale, à savoir qu'un trait n'est pas en cours.

On cherche alors le premier quantum d'un éventuel trait (ligne GG17).Si l'on en trouve un, les lignes GG19 à GG22 vont établir un début de trait, une fin de trait, puis réaffecter à **ppdq** la valeur correspondant au milieu du quantum en cours.

Dans le cas contraire, la ligne GG23 consiste à marquer les pixels des plages allant de **ppdq** à **dpdq** comme des éléments d'une zone caractéristique dans laquelle on pourra trouver les formes primitives, dont on rappelle qu'elles sont un des aspects essentiels de l'invention.

Sous la rubrique HH figure en annexe la procédure **quantum().**

Sa première étape (HH1 à HH3) consiste à initialiser à 1 le nombre de plages formant le quantum, à prendre la plage courante comme première plage et naturellement à donner au nombre total de pixels du quantum noté **somp** le nombre de pixels de cette première plage.

La deuxième étape consiste à examiner si **flag = 1,** en HH4, ce qui veut dire que l'on se trouve au premier quantum d'un trait à détecter.

Suivant qu'il y a ou non un contact au fond du quantum, la variable **contact1** est mise à 1 ou à 0, respectivement aux lignes HH7 et HH8. Dans les autres cas, la ligne HH10 met la variable **contact** à 0.

Intervient alors en HH11 un opérateur **TANT QUE** dont la condition d'exécution est soit que le nombre de plages du quantum n'est pas encore égal à 3, soit la condition 2 énoncée plus haut dans la définition du quantum, maintenant écrite formellement.

Les lignes HH12 à HH14 font que, si l'on est à la fin du pavé, la procédure renvoie l'information "pas de quantum jusqu'à la fin du pavé".

S'il y a dépassement de plus de 1 pixel de la plage suivante par rapport à la plage courante, les lignes HH15 à HH18 font que la procédure renvoie l'information "pas de quantum jusqu'à la plage courante".

Ensuite, la plage suivante devient la plage courante, on incrémente le nombre de plages du quantum noté **np,** on augmente en conséquence la variable **somp** représentant le nombre total de pixels, en y ajoutant celui de la plage courante.

Par suite, la ligne HH22 examine si l'on est au premier quantum d'un trait à détecter et, s'il y a contact au sommet, la ligne HH25 donne à la variable **contact** la valeur **contact1 + 1,** compte tenu de ce contact au sommet. Dans le cas contraire, la ligne HH26 donne à **contact** la valeur de **contact1.**

Pour le reste, la ligne HH27 renvoie l'information "un quantum formé des plages de pp à la plage courante a été trouvé".

L'homme de l'art comprendra maintenant qu'un trait peut être défini comme une suite de quanta qui se recouvrent partiellement. Et, par définition, on rappelle qu'un quantum est une succession d'au moins trois plages connexes satisfaisant les conditions précitées.

Sous la rubrique JJ donnée en annexe, on trouvera l'écriture formelle de la structure trait, en langage C, avec quelques commentaires permettant de la mieux comprendre.

Il est clair que pour obtenir une définition complète des traits figurant dans l'image, il faudra non seulement procéder à un balayage horizontal par la procédure **segver()** qui a été décrite en détail plus haut, mais aussi à un balayage vertical par une procédure **seghor()** faisant appel aux mêmes procédures que précédemment.

L'énoncé détaillé de ces procédures n'est pas effectué ici, puisque l'homme de l'art saura certainement transposer la procédure **segver()** en **seghor().**

Il est maintenant fait référence aux figures 3A et 3B.

Dans une première phase, les pixels de la matrice trace appartenant aux traits verticaux sont codés par 0, et les autres pixels faisant partie du caractère (c'est-à-dire se distinguant du fond) sont codés par un 2.

Le résultat de ceci, pour la lettre B, apparaît sur la figure 3A.

Lorsqu'on a effectué l'autre balayage, une deuxième phase permet d'ajouter 0 aux pixels qui appartiennent aux traits horizontaux et 1 aux autres pixels.

Le résultat de ceci est illustré sur la figure 3B.

Cette figure montre clairement qu'à la fin de la détection des traits, les éléments de la matrice trace n'appartenant à aucun trait forment les zones caractéristiques dont les pixels sont codés par 3. Les pixels codés par 0 représentent l'intersection de deux traits.

On peut alors définir des zones caractéristiques, qui comprennent l'ensemble des pixels connexes qui n'appartiennent à aucun trait. La déclaration d'une zone caractéristique en langage C est exprimée sous la rubrique KK en annexe, accompagnée de commentaires.

Les zones caractéristiques peuvent alors être détectées par une procédure **detzone()** cette procédure balayant la matrice trace. A nouveau, les zones caractéristiques sont agencées selon une liste doublement liée, comme exprimé plus haut.

L'homme de l'art comprendra que les zones caractéristiques sont définies d'une part quant à leur nature, d'autre part en ce qui concerne leur orientation relativement à un ou des traits qui les rejoignent.

On peut alors exprimer schématiquement le résultat du procédé selon l'invention, tel qu'exécuté jusqu'à présent, en examinant sur la figure 4 ce qui permet la reconnaissance de la lettre B.

On y voit :

les extrémités de traits notées 4,

des changements de direction notés d,

des branchements triples notés X, Y, Z et W (pour tenir compte de leurs différences quant à l'orientation des traits qui les rejoignent),

des boucles notées B.

On rappelle que ces éléments sont seuls utilisés pour représenter un caractère, et qu'ils sont codés suivant la direction du ou des traits qui y aboutissent.

Tout ce qui vient d'être décrit relève du module M2 de la figure 1.

A partir de là, le module M3 va utiliser les positions respectives des zones des formes caractéristiques primitives fournies par le module M2, en vue d'obtenir des descriptions invariantes, particulièrement bien adaptées à la reconnaissance des caractères.

Le Demandeur a observé qu'un balayage par une droite variable (plus généralement par une ligne variable) permet d'obtenir un ordre total des éléments primitifs, ordre qui dépend de la topologie plane de ces éléments ou formes primitives.

On peut par exemple choisir un point intérieur ou non à la matrice dans laquelle est inséré le caractère, et faire pivoter une demi-droite autour de ce point. En notant les différentes formes primitives rencontrées, dans l'ordre où cette droite les intercepte, on obtient une liste ordonnée des formes primitives.

L'homme de l'art comprendra que cet ordre est invariant en fonction des projections planes de la figure d'origine, à condition que la droite qui balaye la projection soit la projection de la droite considérée sur la figure d'origine.

Ceci peut amener à choisir le balayage en fonction des transformations subies par les caractères, lors de l'inscription sur le support papier qui les reçoit.

En pratique, il a été observé que les transformations les plus fréquentes sont des anamorphoses horizontales ou verticales.

C'est pourquoi il est considéré comme actuellement préférable de choisir purement et simplement des balayages horizontaux et verticaux de la matrice où est inséré le caractère, c'est-à-dire que le point autour duquel tourne la droite de balayage est rejeté à l'infini. Ces balayages sont particulièrement simples à effectuer dans une matrice carrée ou rectangulaire, tout comme d'ailleurs des balayages avec des droites parallèles orientées à ± 45° par rapport aux limites de la matrice carrée.

Dans une matrice triangulaire, on choisirait bien sûr les trois balayages parallèles aux trois lignes que définissent les pixels, dans la matrice de tessellation (0, +60°, - 60°).

On peut alors considérer le résultat de deux balayages de ce type sur la représentation de la figure 4. On obtient :

balayage horizontal 4 Z D B X Y B D 4 W

balayage vertical 4 4 Z Y W B B D X D

L'ordre ainsi obtenu est un ordre total, ce qui exprime qu'il ne tient pas compte du fait que des zones sont rencontrées simultanément par la droite de balayage.

Selon un aspect particulièrement intéressant et avantageux de l'invention, on préfère utiliser un ordre partiel si deux zones caractéristiques sont rencontrées simultanément par la droite de balayage, on les met entre parenthèses, indiquant par là que leur ordre est indifférent.

Les listes précédentes deviennent alors des listes partiellement ordonnées, que l'on peut exprimer comme suit :

balayage horizontal (4 Z D) B (X Y) B (4 W D)

balayage vertical (4 4) (Z Y W) (B B) (D X D)

Bien entendu, la nature des balayages ainsi utilisés est fixée à l'avance une fois pour toutes, en d'autres termes "prédéterminée".

Il est alors possible d'enregistrer dans le module de mémoire M5 de la figure 1 des descriptions standard de formes primitives constituées de deux listes partiellement ordonnées, associées ensemble à une forme donnée de caractères. A titre d'exemple, les deux lignes ci-dessus seraient naturellement associées au caractère B.

Bien entendu, la présente invention n'est pas limitée à l'usage des balayages par des droites parallèles, ni à l'utilisation de deux listes partiellement ordonnées seulement, car on peut augmenter le nombre de listes partiellement ordonnées pour augmenter les performances de la reconnaissance de caractères si nécessaire.

Par ailleurs, des listes partiellement ordonnées peuvent être obtenues par balayage à l'aide de courbes telles que des cercles de dimensions variables, des spirales déformables, ou autres. Ce qu'il faut assurer, c'est que la représentation obtenue soit rendue autant que possible invariante en fonction des transformations géométriques prévisibles sur la représentation d'entrée de l'ensemble des caractères, qui fait intervenir notamment leur taille, leur projection plane, et leurs petites déformations.

Le module M4 va effectuer la reconnaissance de caractères proprement dite.

On a indiqué ci-dessus comment la mémoire M5 contient des descriptions standard de formes primitives associées par exemple par paires à un caractère donné.

Selon un aspect intéressant de l'invention, l'accès à cette mémoire M5, qui est avantageusement agencée en base de données, est rendu plus rapide par le fait que les descriptions qu'elle contient sont rangées par classes non disjointes.

L'accès à une classe se fait par un processus dit HASH-CODE.

Pour ce processus, on utilise comme vecteur d'interrogation la présence ou l'absence d'un certain nombre de formes primitives, des types (c), (d), (e) définis plus haut, c'est-à-dire les points de rebroussement, les croisements ou branchements à trois branches ou plus, et les boucles fermées respectivement.

Le type (d) des croisements ou branchements à trois branches ou plus est particulièrement intéressant pour la recherche, d'autant plus que l'utilisation de deux listes partiellement ordonnées simultanées permet de le localiser aisément dans la matrice.

La longueur d'une liste partiellement ordonnée est également un élément discriminant important, lors de la recherche de descriptions standard dans la base de données que contient le module M5.

Le module M4 va donc effectuer une comparaison entre la description inconnue X provenant du module M3 et l'une des descriptions standard Y provenant de la mémoire M5. Le choix des descriptions standard s'effectue donc comme exposé ci-dessus. La comparaison proprement dite peut utiliser une technique habituelle de comparaison entre chaînes de caractères, par exemple :

"programmation dynamique", ou
procédé sous-optimal de plus grande pente.

Ces deux procédés sont décrits par exemple dans Reconnaissance des Formes par Algorithmes, J.C. Simon, Masson 84.

L'avantage du procédé sous-optimal de plus grande pente est d'être d'ordre n, alors que la programmation dynamique est d'ordre $n^2$, ce qui le rend bien moins intéressant lorsque la taille de la base de données est importante. Le résultat de chaque comparaison est une distance d(X,Y) entre la description inconnue X et l'une des descriptions standard Y.

Les descriptions standard Y correspondant aux plus courtes distances sont sélectionnées. Lors de la mise en pratique de l'invention, il a été fréquent de trouver une ou plusieurs descriptions Y pour lesquelles d(X,Y) = 0.

Bien entendu, les différentes descriptions connues Y pour lesquelles la distance est nulle seront relatives aux mêmes caractères.

Exceptionnellement, la distance d dépassera un seuil, auquel cas le module M4 déclare un rejet.

Un test est alors effectué, qui peut mettre en évidence une anomalie de zones de formes primitives, dénotant le plus souvent un épaississement anormal du caractère à identifier.

Le module M6 d'affinement est alors utilisé.

Ce module M6 reprend la matrice fournie par le module M1, et l'affine par un procédé d'érosion, qui ne va pas jusqu'au squelette du caractère (1 pixel d'épaisseur), mais au contraire s'arrête à deux ou trois pixels d'épaisseur minimum.

La nouvelle donnée est alors soumise successivement aux modules M2, M3 et M4, ce qui se traduit dans la grande majorité des cas par une détection correcte du caractère.

L'invention a été appliquée essentiellement à des caractères imprimés, de qualité moyenne, avec laquelle elle a donné d'excellents résultats.

Elle a également donné de bons résultats pour des caractères manuscrits isolés, tels que des chiffres ou des caractères bâtons.

D'après les premiers essais, l'invention peut aussi s'appliquer à toute image de lignes, en particulier aux mots manuscrits qui, à la différence des caractères évoqués plus haut, comprennent des caractères liés entre eux. Ces premiers essais ont montré qu'il est possible d'identifier un mot inconnu parmi une centaine écrits par un même scripteur.

ANNEXE - 1 -


**AA - Procédure lidonne()**


```
        SI (fin fichier source)
                ALORS

                RETOURNER(0);
AA5     SINON
                lire le nombre de lignes:nl_image;
                lire le nombre de colonnes: nc_image;
                lire la valeur du fond: fond;
                initialiser la matrice TRACE à 0;
AA10            initialiser la matrice IMAGE à G|i||j|, image échan-
                tillonnée;
                lue moins la valeur du fond:
                        IMAGE|i|j| = max((G|i||j|-fond), 0);
                                        i,j·
                calculer le contraste,

contraste       = max    IMAGE|i||j|
                                        i,j


                RETOURNER(1)
```

ANNEXE - 2 -

```
BB      PROCEDURE segver()

        1ère étape:
BB1         initialiser les variables;
        2ème étape:
BB2     TANT QU'il existe encore des lignes sur la matrice
        IMAGE REPETER mettre a, b, c au début des plages de
        la ligne précédente;
BB5         horizon(i, buff);
        mettre d, e, f au début des plages de la ligne
courante:
BB7     TANT QU'il y a des plages sur la ligne précédente ou
        la ligne en cours REPETER
        SI(e<a)
BB10    ALORS
BB11        créer_un_pavé(pavé_courant);
BB12    SINON
            SI(d>b)
BB14        ALORS
            finir_un_pavé(pavé-courant);
BB16    SINON
BB17        TANT QUE(f<b) ou (e>c) REPETER
                SI(f<b)
                ALORS
                    créer_un_pavé(pavé_courant);
                SINON
                    finir_un_pavé(pavé_courant)
empiler la plage |d,e| aux plages déjà trouvées du pavé cou-
rant;
avancer sur la plage suivante de la ligne précédente;
avancer sur la plage suivante de la ligne courante;
```

ANNEXE - 3 -

```
CC      PROCEDURE horizon(i,buffer)


        1ère étape:
CC1          j = 1;
             plage = 0;
             buffer|0| = COLMAX;


        2ème étape:


CC4     TANT QUE (j<fin de ligne) REPETER
                     SI IMAGE|i||j| est un maximum local
                     ALORS
                         chercher_plage(i,j,&ouv,&fer);
                        buffer|plage| = ouv;
                         buffer|plage + 1| = fer;
                        plage = plage +2;
                         j = fer + 1;
CC12                 SINON
                         j = j + 1;
```

ANNEXE - 4 -

```
DD      PROCEDURE chercher plage(i,j,jouv,jfer)


        seuil = IMAGE|i||j|/2
DD2     TANT QUE ((*jouv > début de ligne) et (IMAGE |i||*jouv|>
                    seuil))
        REPETER
DD4              *jouv : *jouv -1;
DD5     TANT QUE ((*jferm < fin de ligne) et (IMAGE|i||*jferm|>
                    seuil
        REPETER
DD7              *jferm = *jferm +1;
```

14

ANNEXE - 5 -

EE    <u>PROCEDURE créer un pavé(ppavé)</u>

<u>1ère étape:</u>

EE1        allouer dynamiquement une structure pavé;

initialiser la première plage de la structure allouée à |d,e|;

initialiser les autres paramètres de la structure pavé;

<u>2ème étape:</u>

EE4        insérer le pavé créé à gauche du pavé pointé par ppave dans la liste doublement liée des pavés déjà trouvés;

<u>3ème étape:</u>

EE6        avancer à la plage suivante de la ligne courante;

ANNEXE - 6 -

FF    <u>PROCEDURE finir un pavé(ppavé)</u>

<u>1ère étape:</u>

FF1        traitever(ppavé);

<u>2ème étape:</u>

affecter au pavé courant le pavé qui suit le pavé ppave dans la liste des pavés;

détruire le pavé ppavé de la liste des pavés;

libérer la structure détruite;

<u>3ème étape:</u>

FF5        avancer à la plage suivante de la ligne précédente;

ANNEXE - 7 -

```
GG      PROCEDURE traitever(ppavé)

        1ère étape:

GG1         ppdq = 0

            dpdq = 0;

GG3         traitencours = FAUX;

        2ème étape:

GG4             TANT QUE (ppdq<=ppavé->fin) REPETER

GG5                 SI(traitencours)

                    ALORS

GG7                     SI(quantum (0,ppave,ppdq,&dpdq))

                         ALORS

GG9                       Fintrait = dpdq;

                          ppdq = (ppdq + dpdq +1)/2;

GG11                      traitencours = 1;

GG12                    SINON

GG13                    memotrait(ppave, debtrait, fintrait);

                        ppdq = fintrait + 1;

GG15                    traitencours = 0;

GG16                SINON

GG17                    SI(quantum(1,ppave,ppdq,&dpdq))

                        ALORS

GG19                     debtrait = ppdq;

                         fintrait = dpdq;

                         ppdq = (ppdq + dpdq +1)/2;

GG22                     traitencours = 1;


                        SINON

GG23                     marquer  les  pixels  des  plages  de  ppdq
                         à dpdq comme des éléments d'une zone.
```

ANNEXE - 8 -

```
HH     PROCEDURE quantum(flag,ppave,pp,dp)


       1ère étape:
HH1    Initialisation : np = 1;
       La première plage est la plage courante;
HH3    somp=nombre de pixels de la première plage pp;


       2ème étape:
HH4    Si flag = 1
          ALORS
HH6          S'il y a contact au fond
HH7              ALORS contactl = 1;
HH8              SINON contactl = 0;
          SINON
HH10         contact = 0
HH11   TANT QUE np<3 ou (np*np + contact*somp/4)< (somp+2-
              np)
HH12      Si l'on est à la fin du pavé
             ALORS
HH14             RETOURNER("pas de quantum jusqu'à la fin
          du pavé")
HH15      S'il y a dépassement de plus de 1 pixel de la plage
          suivante par rapport à la plage courante
             ALORS
HH18             RETOURNER("pas de quantum jusqu'à la plage
cou              courante");
          La plage suivante devient la plage courante;
          np = np + 1;
          somp=somp+nombre de pixels de la plage courante;
HH22      Si flag = 1
             ALORS
                 S'il y a contact au sommet
HH25             ALORS contact = contactl + 1;
HH26             SINON contact = contactl;
HH27   RETOURNER("un quantum formé des plages de pp à la plage
       courante a été trouvé").
```

ANNEXE - 9 -

```
JJ    Struct trait


      int orient   ;
         orient = 1 pour un trait vertical (balayage ligne)
                    0 pour un trait horizontal (balayage co-
                      lonne)
      int idt    ;
         indice de la ligne (resp. de la colonne) pour un
         balayage ligne (resp. colonne) de la première plage
         du segment vertical (resp. horizontal)
      int ipf    ;
           indice de la plage du fond vaut :
         0 si l'extrémité fond est liée
           min|(fin-2)/2,mediane-1| si l'extrémité fond est
                                      libre
      int ips    ;
           indice de la plage du sommet vaut :
           0 si l'extrémité sommet est liée
           min|(fin-2)/2,mediane-1|  si  l'extrémité  sommet
                                      est libre
       float lonsular ;   lonsular : (fin +1)/mediane
      int markfond ; direction de Freeman arrivant à l'extré-
                       mité fond
      int marksommet ;
         direction de Freeman arrivant à l'extrémité sommet
      int fond   ;
         fond = 0 si l'extrémité fond est connectée à un au-
                  tre pavé
                1 si l'extrémité fond est libre
      int sommet    ;
         sommet = 0 si l'extrémité sommet est connectée à un
                    autre pavé
                  1 si l'extrémité sommet est libre
      int fonduse   ;
         fonduse = 0 si l'extrémité fond n'est pas encore
```

```
                    utilisée
              1 si elle est utilisée dans le calcul
              du nombre de branches arrivant sur cette
              extrémité
int sommetuse    ;
    sommetuse = 0 si l'extrémité sommet n'a pas été
                   utilisée
                 1 si elle est utilisée dans le calcul
                   u nombre de branches arrivant sur
                   cette extrémité
struct couple *dfp  ;
            (trait->dfp+k)->x est le début de la kième
                            plage
            (trait->dfp+k)->y est la fin de la kième plage


int fin    ; nombre de plages moins 1
struct trait *ts; pointeur vers l'élément suivant
struct trait *tp; pointeur vers l'élément précédent
    ;
```

ANNEXE - 10 -

```
KK      Struct zonecar

            int orient;
                orient = 1 pour un trait vertical (balayage ligne)
                         0  pour  un  trait  horizontal  (balayage
                         colonne)
            int tdir|8|;
                    tdir|i| = 1 s'il existe un trait qui pointe
                               vers  zonecar  suivant  la  direc-
                               tion i
                             = 0 sinon
            int tplage|40||3|;
                    tplage|k||0| est l'indice ligne de la kième
                               plage
                    tplage|K||1| est l'indice du début .de la
                               kième plage
                tplage|K||2| est l'indice de la fin de la kième
                               plage
            int fin    ; nombre de plages moins 1
            struct zonecar *zs; pointeur vers l'élément suivant
            struct zonecar *zp; pointeur vers l'élément précé-
            dent
            struct zonecar *zls; pointeur vers les zones carac-
                               téristiques liées
                struct zonecar *zlp;
                ;
```

Les zones caractéristiques détectées par la procédure detzone() qui balaie la matrice trace, forment une liste doublement liée.

**Revendications**

1. Procédé de traitement de signaux numériques d'image de lignes, en particulier des caractères, du type dans lequel :
   a) on isole chaque forme élémentaire ou caractère, en l'encadrant dans une matrice de configuration prédéterminée, en particulier rectangulaire, et
   b) on recherche à l'intérieur de la matrice des formes primitives de type prédéterminé, tels que les extrémités de traits ou des croisements ou branchements à au moins trois branches,

caractérisé en ce que l'opération b) comprend :

b11) la recherche de quanta, définis chacun comme un pavé homogène d'un nombre minimum de pixels dont l'intensité est supérieure à un seuil local,

b12) la détection d'une suite de quanta qui se recouvrent, comme représentant un trait, et

b2) la soustraction des traits ainsi reconnus de la matrice pour isoler et identifier des zones caractéristiques contenant lesdites formes primitives.

2. Procédé selon la revendication 1, caractérisé en ce que l'étape b12) comprend :

- au moins un balayage de la matrice par une ligne prédéterminée, déplacée parallèlement à elle-même en translation, une plage courante étant définie par la pile de pixels rencontrée par la ligne de balayage et présentant une intensité supérieure à celle du fond, cette plage courante étant une première plage au début du balayage;
- la recherche de contacts entre la plage courante, une ou des plages amont, ainsi qu'une ou des plages aval, vis-à-vis du balayage; et
- la reconnaissance d'un quantum en présence d'une condition prédéterminée de contact entre plages adjacentes.

3. Procédé selon l'une quelconque des revendications précédentes, caractérisé en ce que les formes primitives de premier niveau comprennent :

- les extrémités de traits;
- les changements de direction;
- les points de rebroussement;
- les croisements ou branchements à au moins trois branches;
- les boucles fermées.

4. Procédé selon l'une des revendications précédentes, caractérisé en ce qu'il comporte en outre :

c) le balayage des zones caractéristiques, par au moins une ligne selon un mouvement prédéterminé, afin d'établir un ordre des zones caractéristiques, identifiées chacune en l'une des formes primitives, et

d) la comparaison de la liste de formes primitives ainsi obtenues à un jeu de descriptions de caractères contenues en mémoire.

5. Procédé selon la revendication 4, caractérisé en ce que les listes de formes primitives sont partiellement ordonnées, réunissant dans un ordre indifférent, en particulier à l'aide de parenthèses, des formes primitives rencontrées simultanément lors du balayage.

6. Procédé selon la revendication 5, caractérisé en ce qu'à chaque matrice, on fait subir au moins deux balayages prédéterminés ou plus, auxquels sont associées respectivement deux listes partiellement ordonnées, que l'on compare à des listes partiellement ordonnées contenues en mémoire, à raison d'une au moins pour chaque caractère ou forme à reconnaître.

7. Procédé selon l'une des revendications 4 à 6, caractérisé en ce que les listes formant les descriptions invariantes contenues en mémoire sont rangées par classes (Ai) non disjointes.

8. Procédé selon la revendication 7, caractérisé en ce que la comparaison entre les listes obtenues et les listes en mémoire fait intervenir un calcul de distance entre chaînes de caractères à comparer, à l'intérieur d'une classe Ai.

9. Procédé selon la revendication 8, caractérisé en ce que, lorsque la distance dépasse un seuil, on procède en outre aux étapes suivantes :

e) érosion du caractère à identifier pour en diminuer l'épaisseur, et

f) nouvelle exécution des étapes b) à d).

10. Dispositif permettant la mise en oeuvre du procédé selon l'une des revendications précédentes, caractérisé en ce qu'il comporte, en combinaison :

- des moyens ($M_1$) de segmentation et de cadrage de caractère, susceptibles de recevoir des informations d'image en provenance d'un système SPI de prise d'image,
- des moyens ($M_2$) de reconnaissance de formes primitives, par soustraction des traits, telle que spécifée dans la revendication 1 ci-dessus,
- des moyens ($M_3$) de description des formes primitives, selon au moins une liste en général partiellement ordonnée,
- des moyens ($M_5$) de stockage de descriptions de caractères, sous forme de listes parenthésées prédéterminées de référence,
- des moyens ($M_4$) de comparaison des listes obtenues aux listes de référence, et
- des moyens ($M_4$) pour identifier le caractère comme étant celui donnant l'écart minimum entre les listes obtenues et les listes de référence.

**11.** Dispositif selon la revendication 10, caractérisé en ce que les formes primitives comprennent :
- les extrémités de traits;
- les changements de direction;
- les points de rebroussement;
- les croisements ou branchements à au moins trois branches;
- les boucles fermées.

**12.** Dispositif selon l'une des revendications 10 et 11, caractérisé en ce qu'il comporte en outre :
- des moyens ($M_6$) d'affinage propres à diminuer l'épaisseur du caractère, avant de l'appliquer à nouveau aux moyens ($M_2$) de reconnaissance de formes primitives.

## Claims

**1.** Method of treating numerical signals of a line image, in particular characters, of the type in which:
a) each elementary form or character is isolated, by framing it in a matrix of a predetermined configuration, especially rectangular, and
b) a search is performed inside the matrix for primitive shapes of a predetermined type, such as the ends of strokes or crossings or junctions having at least three branches,
characterized in that operation b) comprises:
b11) a search for quanta, each defined as a homogeneous area of a minimum number of pixels, the intensity of which is greater than a local threshold,
b12) the detection of a suite of quanta which overlap, as representing a stroke, and
b2) the removal of the strokes thus recognized from the matrix for isolating and identifying characteristic zones containing said primitive shapes.

**2.** Method according to Claim 1, characterized in that step b12) comprises:
- at least one scanning of the matrix by a predetermined line, displaced parallel to itself in translation, a current range being defined by the stack of pixels encountered by the scanning line and having an intensity greater than that of the background, this current range being a first range at the commencement of the scanning;
- a search for contacts between the current range, one or more upstream ranges, and one or more downstream ranges, with respect to the scanning; and
- the recognition of a quantum in the presence of a predetermined contact condition between adjacent ranges.

**3.** Method according to any one of the preceding Claims, characterized in that the primitive shapes of first level comprise:
- the ends of strokes;
- the changes of direction;
- the points of reflection;
- the crossings or junctions having at least three branches;
- the closed loops.

**4.** Method according to one of the preceding Claims, characterized in that it comprises, in addition:
c) the scanning of the characteristic zones by at least one line in a predetermined movement, in order to establish an order of characteristic zones, each identified in one of the primitive shapes, and
d) a comparison of the list of primitive shapes thus obtained with a set of descriptions of characters contained in the memory.

**5.** Method according to Claim 4, characterized in that the lists of primitive shapes are partly arranged, combining in an indifferent order, especially with the help of parentheses, primitive shapes encountered simultaneously during the scanning.

**6.** Method according to Claim 5, characterized in that each matrix is subjected to at least two predetermined scannings or more, with which are associated, respectively, two partially arranged lists, which are compared with partially arranged lists contained in the memory, at a rate of at least one for each character or shape to be recognized.

**7.** Method according to one of Claims 4 to 6, characterized in that the lists forming the invariant descriptions contained in the memory are classified in non-disjoint classes (Ai).

**8.** Method according to Claim 7, characterized in that the comparison between the lists obtained and the lists in the memory involves a calculation of distance between chains of characters to be compared, inside a class Ai.

**9.** Method according to Claim 8, characterized in that, when the distance exceeds a threshold, the following steps in addition are proceeded with:
  e) erosion of a character to be identified in order to decrease its thickness, and
  f) renewed performance of steps b) to d).

**10.** Device enabling the method according to one of the preceding Claims to be carried out, characterized in that it comprises, in combination:
  - means ($M_1$) for segmenting and framing a character, these means being adapted for receiving image information originating from an image receiving system SPI,
  - means ($M_2$) for recognizing primitive shapes by removal of strokes, such as specified in Claim 1 above,
  - means ($M_3$) for describing primitive shapes, according to at least one generally partially arranged list,
  - means ($M_5$) for storing character descriptions, in the form of predetermined parenthesesed reference lists,
  - means ($M_4$) for comparing the lists obtained with the reference lists, and
  - means ($M_4$) for identifying the character as being that giving the minimum discrepancy between the lists obtained and the reference lists.

**11.** Device according to Claim 10, characterized in that the primitive shapes comprise:
  - the ends of strokes;
  - the changes in direction;
  - the points of reflection;
  - the crossings or junctions having at least three branches;
  - the closed loops.

**12.** Device according to one of Claims 10 and 11, characterized in that it comprises, in addition:
  - refining means ($M_6$) adapted for decreasing the thickness of the character before applying it again to the means ($M_2$) for recognizing primitive shapes.

**Patentansprüche**

**1.** Verfahren zur Verarbeitung digitaler Zeilenbildsignale, insbesondere von Zeichen, der Art bei dem:
  a) man jede Elementarform oder jedes Zeichen isoliert, indem man es in einer Matrix vorgegebener Konfiguration, insbesondere einer rechtwinkligen Konfiguration, einrahmt, und
  b) man im Innern der Matrix primitive Formen eines vorgegebenen Typs sucht, und zwar solche wie die Strichenden oder Überkreuzungen oder Verzweigungen mit wenigstens drei Zweigen,
  dadurch gekennzeichnet, daß der Vorgang b) umfaßt:
    b11) die Suche nach Quanten, die jeweils als homogener Block einer minimalen Anzahl von Bildpunkten, deren Intensität höher als eine lokale Schwelle ist, gebildet sind,
    b12) das Feststellen einer Folge von Quanten, die sich überdecken, um einen Strich zu bilden, und

23

b2) die Subtraktion der so erkannten Striche von der Matrix, um charakteristische Zonen, die die primitiven Formen enthalten, zu isolieren und zu identifizieren.

2. Verfahren nach Anspruch 1, dadurch gekennzeichnet, daß der Schritt b12) umfaßt:
   - wenigstens ein Abtasten der Matrix durch eine vorgegebene Linie, die parallel zu sich selbst in Translationsrichtung bewegt wird, wobei ein augenblicklicher Bereich durch die Ansammlung der von der abtastenden Linie angetroffenen Bildpunkte, die eine zum Untergrund höher liegende Intensität aufweisen, gebildet wird, wobei dieser augenblickliche Bereich ein erster Bereich zu Beginn des Abtastens ist;
   - die Suche nach Berührungspunkten zwischen dem augenblicklichen Bereich, einem oder mehreren, hinsichtlich der Abtastung darüberliegenden Bereichen ebenso wie einem oder mehreren, darunterliegenden Bereichen; und
   - das Erkennen eines Quants in der Gegenwart einer vorgegebenen Berührungsbedingung zwischen aneinandergrenzenden Bereichen.

3. Verfahren nach einem der vorhergehenden Ansprüche, dadurch gekennzeichnet, daß die primitiven Formen eines ersten Niveaus umfassen
   - die Enden von Strichen;
   - die Richtungsänderungen;
   - die Umkehrpunkte;
   - die Überkreuzungen oder Verzweigungen mit wenigstens drei Zweigen;
   - die geschlossenen Schleifen.

4. Verfahren nach einem der vorhergehenden Ansprüche, dadurch gekennzeichnet, daß es außerdem umfaßt:
   c) das Abtasten der charakteristischen Bereiche mit wenigstens einer Linie entlang einer vorgegebenen Bewegung, um eine Ordnung der charakteristischen Bereiche festzulegen, die jeweils in einer der primitiven Formen identifiziert werden, und
   d) das Vergleichen der so erhaltenen Liste der primitiven Formen mit einem in einem Speicher enthaltenen Satz von Zeichenbeschreibungen.

5. Verfahren nach Anspruch 4, dadurch gekennzeichnet, daß die Listen von primitiven Formen teilweise geordnet werden, indem sie in einer unbestimmten Anordnung, insbesondere mit Hilfe von Klammern, primitive Formen vereinen, die gleichzeitig beim Abtasten angetroffen wurden.

6. Verfahren nach Anspruch 5, dadurch gekennzeichnet, daß man bei jeder Matrix wenigstens zwei Abtastungen oder mehr durchführt, mit denen jeweils zwei teilweise geordnete Listen verbunden sind, die man mit teilweise geordneten, in einem Speicher enthaltenen Listen im Verhältnis von wenigstens einer für jedes zu erkennende Zeichen oder jede Form vergleicht.

7. Verfahren nach einem der Ansprüche 4 bis 6, dadurch gekennzeichnet, daß die Listen, die die in einem Speicher enthaltenen, invarianten Beschreibungen bilden, nach nichtdisjunkten Klassen (Ai) geordnet sind.

8. Verfahren nach Anspruch 7, dadurch gekennzeichnet, daß der Vergleich zwischen den erhaltenen Listen und den gespeicherten Listen eine Abstandsberechnung zwischen zu vergleichenden Zeichenketten innerhalb einer Klasse Ai vervendet.

9. Verfahren nach Anspruch 8, dadurch gekennzeichnet, daß man, sobald der Abstand eine Schwelle übersteigt, außerdem zu folgenden Verfahrensschritte übergeht:
   e) Abtragen des zu identifizierenden Zeichens, um seine Dicke zu verringern, und
   f) erneutes Durchführen der Schritte b) bis d).

10. Vorrichtung, die die Ausführung des Verfahrens nach einem der vorhergehenden Ansprüche ermöglicht, dadurch gekennzeichnet, daß sie zusammen umfaßt:
   - eine Vorrichtung ($M_1$) zur Segmentierung und Einrahmung von Zeichen, die geeignet ist, Bildinformationen von einem Bildaufnahmesystem (SPI) zu erhalten,
   - eine Vorrichtung ($M_2$) zum Erkennen primitiver Formen durch Subtraktion von Strichen, wie im obigen Anspruch 1 definiert,
- eine Vorrichtung (M$_3$) zur Beschreibung von primitiven Formen entsprechend wenigstens einer im allgemeinen teilweise geordneten Liste,
- eine Vorrichtung (M$_5$) zum Speichern von Zeichenbeschreibungen in der Form von vorgegebenen, eingeklammerten Bezugslisten,
- eine Vorrichtung (M$_4$) zum Vergleichen der erhaltenen Listen mit den Bezugslisten, und
- eine Vorrichtung (M$_4$) zum Identifizieren des Zeichens als solches, das den minimalen Abstand zwischen den erhaltenen Listen und den Bezugslisten ergibt.

**11.** Vorrichtung nach Anspruch 10, dadurch gekennzeichnet, daß die primitiven Formen umfassen:
- die Enden von Strichen;
- die Richtungsänderungen;
- die Umkehrpunkte;
- die Überkreuzungen oder Verzweigungen mit wenigstens drei Zweigen;
- die geschlossenen Schleifen.

**12.** Vorrichtung nach einem der Anspruch 10 und 11, dadurch gekennzeichnet, daß sie außerdem umfaßt:
- eine Vorrichtung (M$_6$) zum Verfeinern, die geeignet ist, die Dicke des Zeichens zu reduzieren, bevor erneut die Vorrichtung (M$_2$) zum Erkennen primitiver Formen angewandt wird.

## FIG.1

SPI

1

2

3
IMAGE
ENREGISTREE

M1
SEGMENTATION
ET
CADRAGE

M5
DESCRIPTIONS
STANDARD
DE FORMES
PRIMITIVES

M6
AFFINEMENT

M2
RECONNAISSANCE
DES FORMES
PRIMITIVES

REJET

RECONNAISSANCE
DE
CARACTERE

B

RESULTAT

M4

M3
DESCRIPTION
DES FORMES
PRIMITIVES

## FIG. 2

m₂

m₁

a

( ····· p₁ ····· )

( ············ p₂ ············ )

26

BALAYAGE HORIZONTAL

## FIG.3A

BALAYAGE VERTICAL

## FIG.3B

## FIG. 4

FIG.5

28

ligne i

$g_1$ $d_1$ $g_2$ $d_2$

## FIG.6A

ligne
précédente i-1

a b c

ligne
courante i

d e f

## FIG.6B

ligne i-1
ligne i

a b c
d e f

## FIG.7A

ligne i-1
ligne i

a b c
d e f

## FIG.7B

ligne i-1
ligne i

a b c
d e f

## FIG.8A

ligne i-1
ligne i

a b c
d e f

## FIG.8B